# EUROPÄISCHE PATENTANMELDUNG

(11) **EP 3 588 404 A1**
(43) Veröffentlichungstag der Anmeldung: **01.01.2020**
(21) Anmeldenummer: 18179921.4
(22) Anmeldetag: 26.06.2018
(51) Int. Cl.: G06Q 10/08

(54) **MOBILE VORRICHTUNG ZUM INVENTARISIEREN VON LAGERBESTÄNDEN**

(71) Anmelder: doks. innovation GmbH, 34131 Kassel (DE)
(72) Erfinder: FEDERMANN, Benjamin, 34130 Kassel (DE); FIEDLER, Martin, 44139 Deutschland (DE); BECKER, Mike, 34246 Vellmar (DE); LANG, Martin, 36325 Feldatal (DE)
(74) Vertreter: Zimmermann & Partner Patentanwälte mbB

(57) **Zusammenfassung**

Eine Vorrichtung (100) zum Inventarisieren von Lagerbeständen wird hierin beschrieben. Die Vorrichtung (100) weist eine erste Bilderfassungseinrichtung (111) zum bildlichen Erfassen von Lagergut (200) und/oder von Lagereinrichtungen (210) um das Vorhandensein und um positions-bezogenen Daten eines am Lagergut (200) und/oder an den Lagereinrichtungen (210) angebrachten optisch-maschinenlesbaren Codes (220) auszugeben und mindestens eine relativ zur ersten Bilderfassungseinrichtung (111) bewegbare erste Scaneinrichtung (121) zum Auslesen des von der Bilderfassungseinrichtung (111) erkannten optisch-maschinenlesbaren Codes (220). Weiterhin wird ein Verfahren zum Inventarisieren von Lagerbeständen beschrieben.

## Beschreibung

### Technisches Gebiet

Eine der Hauptaufgaben der Logistik ist es Güter von A nach B zu bewegen, beispielsweise vom Produzenten über einen Händler zum Endkunden. Über verschiedene Zwischenstationen wie Produktionslager oder in späteren Schritten Distributionszentren müssen die Güter umgeschlagen und für den Endkunden passend kommissioniert und verpackt werden. In all diesen Bewegungen über die Supply Chain ist es wichtig die Bewegung der Güter zu verfolgen, um kontinuierlich einen Bestandsüberblick zu haben.

Auch innerhalb eines Lagers müssen alle Bewegungen rückverfolgt werden, so sind tägliche Ein-/Auslagerungen genau zu verfolgen. Ziel ist zum Beispiel, es den Buchbestand im sogenannten Warenwirtschaftssystem oder Enterprise Resource Planning zur realen IST Situation im Lager kontinuierlich entsprechend zu führen. Tägliche Inventur kann daher für die meisten Logistikbetriebe unabdingbar sein.

Der Betrieb, und insbesondere eine Inventarisierung von Lagern ist mit konventioneller Technik und konventionellen Methoden sehr aufwendig, insbesondere Kosten und arbeitsintensiv.

### Zusammenfassung der Erfindung

Es wird daher eine, insbesondere mobile, Vorrichtung zum Inventarisieren von Lagerbeständen angestrebt, die zumindest einige der vorgenannten Probleme löst oder lindert. Diese Aufgabe wird durch die Vorrichtung gemäß Anspruch 1 und das Verfahren zum Inventarisieren von Lagerbeständen gemäß Anspruch 13 gelöst.

Gemäß einer Ausführungsform weist eine Vorrichtung zum Inventarisieren von Lagerbeständen mindestens eine erste Bilderfassungseinrichtung zum bildlichen Erfassen von Lagergut und/oder von Lagereinrichtungen auf.

Weiterhin kann die Vorrichtung eine relativ zur ersten bilderfassungseinrichtungsbewegbare erste Scaneinrichtung aufweisen. Eine solche Scaneinrichtung ist dazu ausgebildet, einen optisch-maschinenlesbaren Code lesen zu können.

Zudem kann eine Kontrolleinrichtung vorgesehen sein, wobei diese insbesondere eine Steuereinrichtung und eine Auswertungseinrichtung umfassen kann, und wobei diese zum Zwecke des Datenaustausches miteinander verbunden sein können. Die Kontrolleinrichtung ist dabei insbesondere funktional zu verstehen, sodass eine gegenständliche Ausgestaltung als separate Steuereinrichtung und damit verbundene Auswerteeinrichtung davon mitumfasst sei.

Die Kontrolleinrichtung ist dabei so ausgebildet und mit der ersten Bilderfassungseinrichtung verbunden, sodass das Vorhandensein eines am Lagergut und/oder an den Lagereinrichtungen angebrachten optisch-maschinenlesbaren Codes erkannt, dessen Position zu ermittelt, und/oder positions-bezogenen Daten des optisch-maschinenlesbaren Codes ausgegeben werden kann. Dazu sind geeignete Komponenten und Algorithmen vorgesehen, sodass die Signale der Bilderfassungseinrichtung zum oben genannten Zweck analysiert und interpretiert werden können. Insbesondere ist die Bilderfassungseinrichtung hinsichtlich Signal und/oder Bildgestalt derart ausgebildet, sodass eine ausreichende Signalqualität bereitgestellt werden kann, um oben genannte Zwecke zu ermöglichen.

Weiterhin kann die Kontrolleinrichtung derart ausgestaltet und mit der ersten Scaneinrichtung verbunden sein, sodass die erste Scaneinrichtung hinsichtlich ihrer optischen Ausrichtung auf den optisch-maschinenlesbaren Code ausgerichtet werden kann. Insbesondere ist die Scaneinrichtung bezüglich zwei Achsen verstellbar ausgestaltet, wobei eine translatorische Verschiebung der Scaneinrichtung nicht zwingend notwendig ist, jedoch eine Manipulation einer Blickrichtung der Scaneinrichtung mindestens in Hochachse und/oder Querachse - oder entsprechenden Pendant-Achsen -zu erfolgen hat.

Gemäß einer Ausführungsform erfolgt die Ausrichtung der ersten Scaneinrichtung mittels einer dazu vorgesehenen und entsprechend ausgeführten Steuereinrichtung.

Gemäß einer weiteren Ausführungsform umfasst die Kontrolleinrichtung, insbesondere Funksignale, eine Auswertungseinrichtung, wobei die Auswerteeinheit Richtung derart ausgestaltet ist, um Vorhandensein eines am Lagergut und/oder an den Lagereinrichtungen angebrachten optisch-maschinenlesbaren Codes zu erkennen, dessen Position zu ermitteln, und/oder positions-bezogenen Daten des optisch-maschinenlesbaren Codes auszugeben.

Dadurch ergibt sich erstmalig die Möglichkeit, die Erfassung von Waren und logistischen Einheiten in einem Palettenlager kostengünstig und effizient durchzuführen. Insbesondere wird der Bedarf an menschlicher Arbeitskraft reduziert, denn insbesondere mithilfe einer mobilen, insbesondere fliegenden, ausgestalteten Vorrichtung gemäß einer der genannten Ausführungsformen wird ermöglicht, dass in gleicher Weise obere und untere Regale hinsichtlich ihres Inhaltsinventarisierung werden können. Weiterhin ergibt sich eine Verbesserung in der Qualität der Inventarisierung, insbesondere da die Fehleranfälligkeit reduziert wird.

Gemäß einer Ausführungsform weist ein Verfahren zum Inventarisieren von Lagerbeständen, folgendes auf: Bewegen einer mobilen Vorrichtung, insbesondere einer mobilen Vorrichtung gemäß einem der vorherigen Ansprüche, entlang von Lagergut und/oder einer Lagereinrichtung; Erfassen eines ersten Bildes vom Lagergut und/oder der Lagereinrichtung durch eine erste Bilderfassungseinrichtung der mobilen Vorrichtung; Verarbeiten des ersten Bildes zur Erkennung, ob ein optisch-maschinenlesbarer Code am Lagergut und/oder an der Lagereinrichtung angebracht ist und nachfolgendes Ermitteln von ersten positions-bezogenen Daten des am Lagergut und/oder an der Lagereinrichtung angebrachten optisch-maschinenlesbaren Codes; Übermitteln der ersten positions-bezogenen Daten an eine bewegbare erste Scaneinrichtung der mobilen Vorrichtung; Ausrichten der ersten Scaneinrichtung auf den optisch-maschinenlesbaren Code; und Auslesen des optisch-maschinenlesbaren Codes durch die erste Scaneinrichtung.

Gemäß einer Ausführungsform der Erfindung, wird überprüft ob der optisch-maschinenlesbare Code erfolgreich ausgelesen wurde. Im negativen Fall kommt die Ausführungsform des zuvor beschriebenen Verfahrens zum Einsatz, in dem ein zweites Bild des Lagerguts und/oder der Lagereinrichtung durch die erste Bilderfassungseinrichtung aufgenommen wird, daraus die Position des maschinenlesbaren Codes bestimmt wird, die erste Scaneinrichtung abermals auf den maschinenlesbaren Code ausgerichtet wird, insbesondere jetzt mit einer neuen Position, sodass der auslesbare Code erfolgreich ausgelesen werden kann. Auf diese Weise wird ermöglicht, dass ein fehlerhaftes und/oder unvollständiges Auslesen zu einem abermaligen Durchführen des Verfahrens führt, und - obgleich die Mobilevorrichtung sich bereits weiter bewegt hat - der maschinen-auslesbare Code desselben Lagerguts und/oder derselben Lagereinrichtung nun erfolgreich ausgelesen werden kann.

Gemäß einer Ausführungsform bewegt sich die Vorrichtung, insbesondere ausgebildet als Mobilevorrichtung, während der Ausführung des Verfahrens gemäß einer der zuvor beschriebenen Ausführungsformen an einem Lagergut und/oder an einer Lageeinrichtung vorbei. Das Verfahren, bzw. Ausführungsformen davon, betrifft somit ein Auslesen im Vorbeiflug, Vorbeifahren, und/oder im Vorbeigehen.

Gemäß einer Ausführungsform wird mittels einer Scanbeleuchtung, insbesondere der ersten Scanvorrichtung, ein Beleuchtungsfleck auf dem Lagergut und oder auf der Lagereinrichtung erzeugt. Dieser Beleuchtungsfleck wird von der Bilderfassungseinrichtung mit erfasst, wobei daraus ein Rückschluss auf eine Ausrichtung der ersten Scaneinrichtung getroffen wird. Somit kann die Interpretation des Beleuchtungsflecks eine Validierung der Ausrichtung der ersten Scaneinrichtung bewirken. Insbesondere wird die somit erkannte Position des Beleuchtungsflex, und insbesondere die daraus bekannte Ausrichtung der Scaneinrichtung, dazu verwendet die erste Scaneinrichtung derart nach zu führen, dass der maschinen-auslesbare Code erfolgreich ausgelesen werden kann.

Zusätzliche bevorzugte Merkmale, Abwandlungen und Vorteile ergeben sich aus den abhängigen Ansprüchen, den Figuren und der folgenden Beschreibung.

### Kurzbeschreibung der Figuren

Nachfolgend soll die Erfindung anhand von in den Figuren gezeigten Ausführungsbeispielen erläutert werden. Die Komponenten in den Figuren sind nicht notwendigerweise maßstabsgerecht, und der Nachdruck wird vielmehr auf das Erläutern der Grundgedanken der Erfindung gelegt. Überdies bezeichnen in den Figuren gleiche Bezugszahlen entsprechende Teile.
Figur 1 zeigt eine perspektivische Ansicht einer mobilen Vorrichtung zum Inventarisieren am Beispiel einer Drohne gemäß einer Ausführungsform.
Figur 2 zeigt eine perspektivische Ansicht einer mobilen Vorrichtung zum Inventarisieren am Beispiel einer Drohne gemäß einer weiteren Ausführungsform.
Figur 3 zeigt eine Seitenansicht der in Figur 2 dargestellten mobilen Vorrichtung.
Figur 4a und Figur 4b zeigen jeweils perspektivische Ansichten eines Moduls gemäß einer Ausführungsform.
Figur 5 illustriert einen Teil eines Verfahrens zum Inventarisieren von Lagerbeständen gemäß einer Ausführungsform.
Figur 6 zeigt schematisch ein von einer Bilderfassungseinrichtung aufgenommenes Bild.

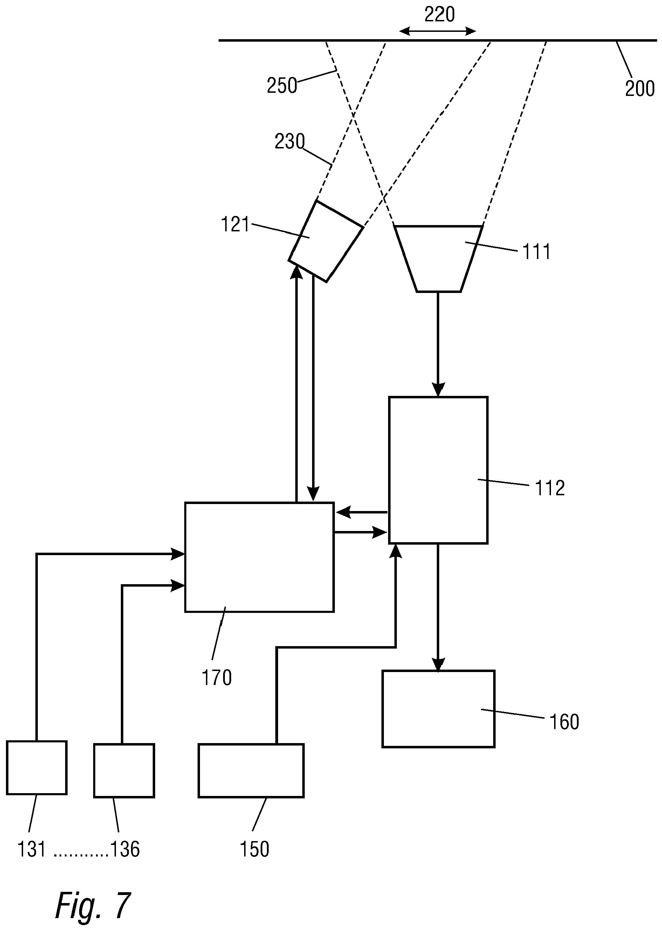

Figur 7 illustriert schematisch einen Datenfluss einer mobilen Vorrichtung zum Inventarisieren gemäß einer weiteren Ausführungsform.

### Detaillierte Beschreibung der Figuren

In der folgenden detaillierten Beschreibung wird auf die anliegenden Zeichnungen Bezug genommen, die Teil hiervon sind und in der zur Erläuterung spezifische Ausführungsformen dargestellt sind, in denen die Erfindung verwirklicht werden kann. Es sei bemerkt, dass auch andere Ausführungsformen verwendet werden können und dass strukturelle oder logische Änderungen vorgenommen werden können, ohne vom Schutzumfang der vorliegenden Erfindung abzuweichen. Die folgende detaillierte Beschreibung ist daher nicht als einschränkend anzusehen, und der Schutzumfang der vorliegenden Erfindung ist durch die anliegenden Ansprüche definiert. Die hier beschriebenen Ausführungsformen verwenden einen spezifischen Sprachgebrauch, der nicht als den Schutzumfang der anliegenden Ansprüche einschränkend ausgelegt werden sollte.

Der Begriff "optisch-maschinenlesbarer Code" umfasst alle maschinen-lesbaren Codes, die basierend auf optischen Methoden dekodiert werden können, insbesondere Strichcodes, Quick Response (QR) Codes oder andere eindimensionale und/oder zweidimensionale Schwarz-Weiß Abbildungen von Strichen, Rechtecken, Quadraten oder ähnlichem. Der "optisch-maschinenlesbarer Code" kann dabei auf beliebige Art angebracht sein, insbesondere kann es sich um ein optisch-maschinenlesbares Etikett handeln oder der optisch-maschinenlesbarer Code kann aufgedruckt sein.

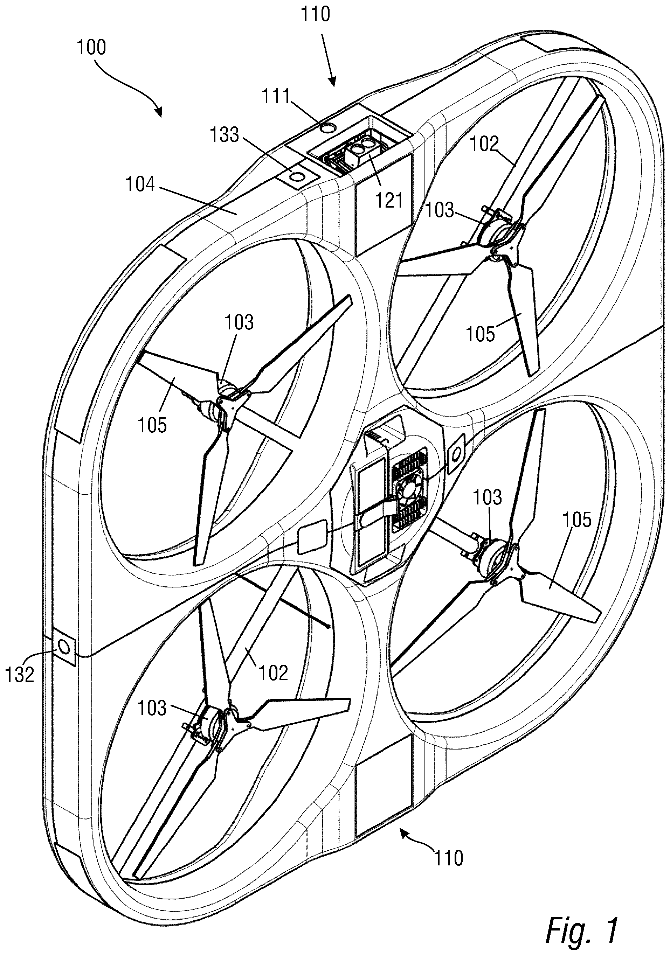

Figur 1 zeigt eine perspektivische Ansicht einer Vorrichtung (100) zum Inventarisieren gemäß einer Ausführungsform. Vorzugsweise handelt es sich bei der Vorrichtung um eine mobile Vorrichtung (100). Der Begriff "mobil" beschreibt dabei, dass die Vorrichtung entweder fahrbar oder auf einem Fahrzeug montierbar oder in irgendeiner Art transportabel ist. Bei der mobilen Vorrichtung (100) kann es sich um eine ferngesteuerte Drohne, eine autonome Drohne, ein bemanntes Fahrzeug, ein ferngesteuertes Fahrzeug, ein Flurförderzeug, ein Flurfördergerät, oder um ein autonomes Fahrzeug handeln. Im Folgenden werden Ausführungsformen beschrieben, bei dem es sich bei der Vorrichtung (100) zum Inventarisieren um eine Drohne handelt (Figuren 1 bis 3), jedoch lassen sich alle im Folgenden erläuterten Grundgedanken der Erfindung auf andere Vorrichtungen (100) zum Inventarisieren übertragen.

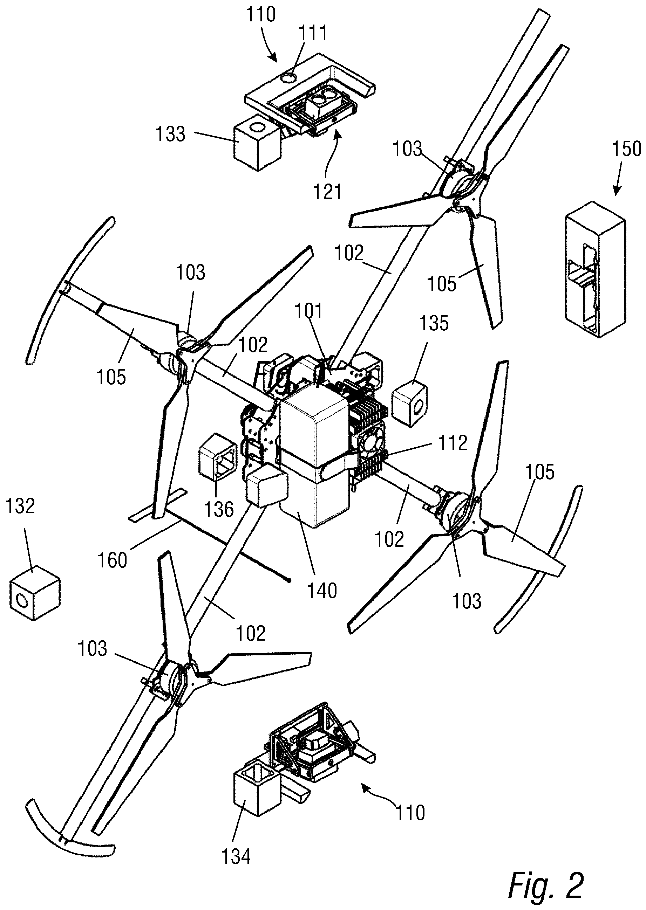

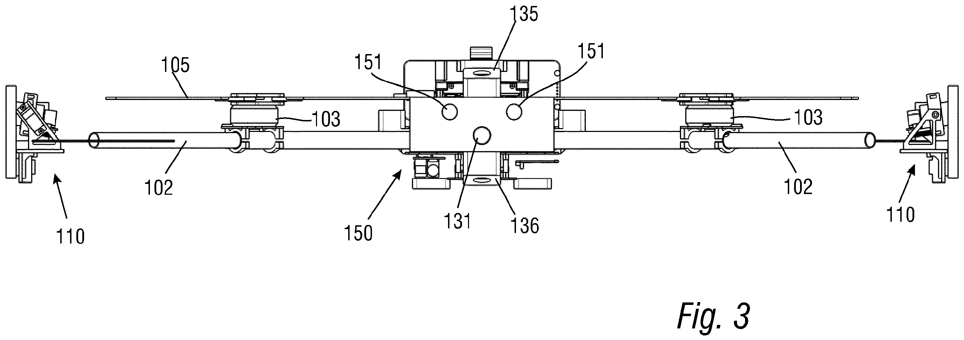

Gemäß einer Ausführungsform kann die Vorrichtung (100) ein Gehäuse (104) aufweisen, wie in Figur 1 dargestellt. Bei dem Gehäuse (104) der Vorrichtung (100) kann es sich um ein nicht-tragendes Merkmal handeln, wobei das Gehäuse einen Schaumstoff aufweisen kann, wie beispielsweise expandiertes Polypropylen (EPP). Vorteilhafterweise kann ein Gehäuse (104) als Kollisionsschutz und/oder als Halterung für ein oder mehrere Bauteile dienen. In manchen Ausführungsformen weist die Vorrichtung (100) kein Gehäuse auf, wie in Figuren 2 und 3 dargestellt.

Die Vorrichtung (100) kann einen Grundrahmen (101), einen oder mehrere Motorträger (102), einen oder mehrere Motoren (103), eine Stromversorgung (140) und optional eine Vielzahl Rotorblätter (105) aufweisen.

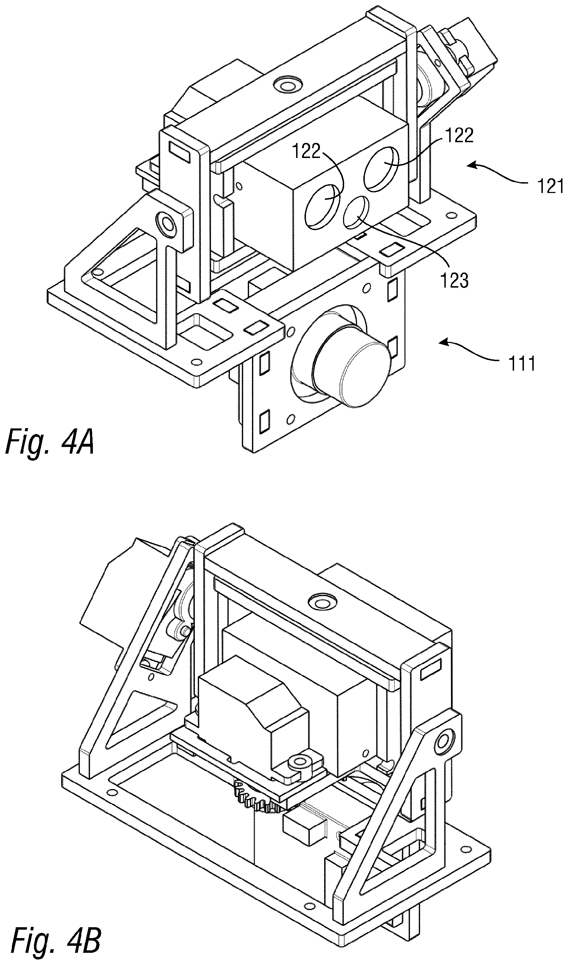

Weiterhin weist die Vorrichtung (100) eine erste Bilderfassungseinrichtung (111) zum bildlichen Erfassen von Lagergut (200) und/oder von Lagereinrichtungen (210) auf, wie in Figur 4 dargestellt. Die erste Bilderfassungseinrichtung (111) kann eine hochauflösende optische Kamera aufweisen, wobei die optische Kamera eine Ultra-Weitwinkel Optik aufweisen kann. Vorteilhafterweise ermöglicht eine Ultra-Weitwinkel Optik, insbesondere auch bei kurzen Distanzen zwischen der Vorrichtung (100) und Lagergut (200) und/oder von Lagereinrichtungen (210), das Erfassen einer großen Fläche. Die erste Bilderfassungseinrichtung (111) kann einen Bildsensor zum Erfassen von Bilddaten (240) aufweisen.

Die Vorrichtung (100) weist eine Auswerteeinrichtung (112) auf, wobei die erste Bilderfassungseinrichtung (111) mit der Auswerteeinrichtung (112) gekoppelt sein kann, insbesondere kann der Bildsensor mit der Auswerteeinrichtung (112) gekoppelt sein, um erfasste Bilddaten (240) auf die Auswerteeinrichtung (112) zu übertragen. Die Auswerteeinrichtung (112) kann einen leistungsstarken PC umfassen. Die Auswerteeinrichtung (112) kann eingerichtet sein um, insbesondere basierend auf den erfassten Bilddaten (240), das Vorhandensein eines am Lagergut (200) und/oder den an den Lagereinrichtungen (210) angebrachten optisch-maschinenlesbaren Codes (220) zu erkennen.

Gemäß einer Ausführungsform kann die Auswerteeinrichtung (112) ein Bildverarbeitungsmodul aufweisen, wobei das Bildverarbeitungsmodul die erfassten Bilddaten (240) nach typischen Merkmalen von optisch-maschinenlesbaren Codes absuchen kann, wobei das Bildverarbeitungsmodul basierend auf einem machine learning Algorithmus auf das Erkennen von typischen Merkmalen von optisch-maschinenlesbaren Codes trainiert sein kann. Bei Erkennen eines Vorhandenseins des optisch-maschinenlesbaren Codes (220) kann die Auswerteeinrichtung dem optisch-maschinenlesbaren Code (220) eine Identifikationsnummer (ID) zuordnen.

Weiterhin kann die Auswerteeinrichtung (112) basierend auf den erfassten Bilddaten (240) eine Position des erkannten optisch-maschinenlesbarer Codes ermitteln. Basierend auf dieser Position kann die Auswerteeinrichtung (112) positions-bezogene Daten des erkannten optisch-maschinenlesbaren Codes ausgeben.

Gemäß einer Ausführungsform weist die Vorrichtung mindestens eine Positionsbestimmungseinrichtung (150) auf. Die Positionsbestimmungseinrichtung (150) kann eine Kamera (151) aufweisen, bevorzugterweise eine Stereokamera (151). Die Positionsbestimmungseinrichtung (150) ermöglicht die Ermittlung der Position der Vorrichtung (100) relativ zu einem Markierungspunkt, der von einem Benutzer festgelegt sein kann. Die Positionsbestimmungseinrichtung (150) kann auch eine drahtlose Schnittstelle aufweisen, beispielsweise basierend auf WLAN oder RFID.

In einer bevorzugten Ausführungsform kann zur Angabe von positionsbezogenen Daten der Markierungspunkt als "Koordinatenursprung" verwendet. Bevorzugterweise können die positionsbezogenen Daten aus der, basierend auf den erfassten Bilddaten (240) ermittelten, Position des erkannten optisch-maschinenlesbaren Codes und der ermittelten Position der Vorrichtung (100) relativ zu dem Markierungspunkt berechnet werden. Alternativ, insbesondere falls der Markierungspunkt nicht vorhanden oder nicht erkennbar für die Positionsbestimmungseinrichtung (150) ist, können die positionsbezogenen Daten aus der, basierend auf den erfassten Bilddaten (240) ermittelten, Position des erkannten optisch-maschinenlesbaren Codes berechnet werden. Die erste Bilderfassungseinrichtung (111) kann somit die Zuordnung einer Identifikationsnummer und positionsbezogener Daten eines erkannten optisch-maschinenlesbaren Codes ermöglichen.

Gemäß einer Ausführungsform umfasst die Vorrichtung (100) weiterhin mindestens eine, relativ zur ersten Bilderfassungseinrichtung (111), bewegbare erste Scaneinrichtung (121) zum Auslesen des von der Bilderfassungseinrichtung (111) erkannten optisch-maschinenlesbaren Codes (220), wie in Figur 4 dargestellt. Das Auslesen des optisch-maschinenlesbaren Codes (220) umfasst auch das Dekodieren des optisch-maschinenlesbaren Codes (220). Das Dekodieren des optisch-maschinenlesbaren Codes (220) kann durch die erste Bilderfassungseinrichtung (111) oder durch die Auswerteeinrichtung (112) oder durch eine weitere Verarbeitungseinrichtung erfolgen. Bevorzugterweise erfolgt die Dekodierung durch die erste Bilderfassungseinrichtung (111).

Gemäß einer Ausführungsform kann die erste Scaneinrichtung (121) folgendes umfassen: ein oder mehrere Bildbeleuchtungen (122), eine optische Scankamera (123), eine Halterung und ein oder mehrere Antriebe für die Scankamera (123). Die optische Scankamera (123) ermöglicht das Erfassen des optisch-maschinenlesbaren Codes (220). Die optische Scankamera (123) ist in der Halterung gehalten, wobei die Halterung mindestens ein Drehlager mit einem optionalen Dämpfungselement aufweist zur Drehung der optischen Scankamera (123) relativ um mindestens eine Achse. Durch die ein oder mehreren Antriebe für die optische Scankamera (123) ist eine Drehung um eine oder mehrere Achsen antreibbar und durch eine Steuereinrichtung (170) ansteuerbar. In einer bevorzugten Ausführungsform ermöglicht die Halterung der optischen Scankamera (123) eine Drehung um mindestens zwei Achsen. In einer noch bevorzugteren Ausführungsform entspricht die Halterung für die optische Scankamera (123) einer kardanischen Aufhängung, wobei die beiden Drehachsen der kardanischen Aufhängung jeweils von einem separaten Antrieb antreibbar und unabhängig voneinander durch die Steuereinrichtung (170) ansteuerbar sind. In einer bevorzugten Ausführungsform kann die kardanische Aufhängung in einer Pan Achse um bis zu +/- 40° und in einer Tilt Achse um bis zu +/- 85° gedreht werden. Gemäß einer Ausführungsform entsprechen die ein oder mehreren Antriebe Servo-Motoren. Die erste Bilderfassungseinrichtung (111) kann durch die Halterung für die erste Scaneinrichtung (121) gehaltert sein, wobei die erste Bilderfassungseinrichtung bevorzugt starr mit der Halterung verbunden ist. Die erste Scaneinrichtung (121), insbesondere die optische Scankamera (123), kann einen kleineren optischen Öffnungswinkel definieren als die erste Bilderfassungseinrichtung (111). Bevorzugterweise entspricht die optische Scankamera (123) einem Barcodescanner.

Gemäß einer weiteren Ausführungsform weist die erste Scaneinrichtung (121) ein oder mehrere Bildbeleuchtungen (122) auf, die zusammen mit der Scankamera (123) in der Halterung gehalten werden und zusammen mit der Scankamera (123) bewegbar sind. Die ein oder mehreren Bildbeleuchtungen (122) ermöglichen ein Beleuchtungsfleck auf dem Lagergut (200) und/oder der Lagereinrichtung (220) zu erzeugen. In manchen Ausführungsformen kann das Bildverarbeitungsmodul der Auswerteeinrichtung (112) die erfassten Bilddaten (240) nach typischen Merkmalen von Beleuchtungsflecken absuchen, wobei das Bildverarbeitungsmodul basierend auf dem machine learning Algorithmus auf das Erkennen von typischen Merkmalen von Beleuchtungsflecken trainiert sein kann. Bei Erkennen des Vorhandenseins des Beleuchtungsflecks kann die Auswerteeinrichtung die Position des Beleuchtungsflecks ermitteln.

Gemäß einer Ausführungsform ermöglicht die Steuereinrichtung (170) das Steuern einer oder mehrerer Scaneinrichtungen (121), insbesondere ermöglicht die Steuereinrichtung (170) die Drehung einer oder mehrerer optischer Scankameras (123). Bevorzugt ist die Steuereinrichtung (170) ein 32-Bit Mikrocontroller. Die Auswerteeinrichtung (112) und die Steuereinrichtung (170) können miteinander zur Übertragung der positions-bezogenen Daten des optisch-maschinenlesbaren Codes (220) von der Auswertungseinrichtung (112) auf die Steuereinrichtung (170) gekoppelt sein, um die Ausrichtung der ersten Scaneinrichtung (121) auf den optisch-maschinenlesbaren Code (220) zum Auslesen des optisch-maschinenlesbaren Codes (220) zu steuern. Die positions-bezogenen Daten des optisch-maschinenlesbaren Codes (220) stehen in Relation zu Drehwinkeln der jeweiligen Drehachsen mit denen die Ausrichtung der ersten Scaneinrichtung (121) auf den optisch-maschinenlesbaren Code (220) erreicht werden kann.

In einigen Ausführungsformen kann die Zuverlässigkeit der Ausrichtung der ersten Scaneinrichtung (121) auf den optisch-maschinenlesbaren Code (220) verbessert werden durch eine Kalibration. Eine Aufnahme der ersten Scaneinrichtung (121) kann zeitlich verzögert zu einer Aufnahme der ersten Bilderfassungseinrichtung (111) stattfinden, wodurch insbesondere bei einer sich in Bewegung befindlichen Vorrichtung (100) zum Zeitpunkt der Aufnahme der ersten Scaneinrichtung (121) die relative Position zwischen der Vorrichtung (100) und dem erkannten optisch-maschinenlesbaren Code (220) abweichend von der ermittelten Position des erkannten optisch-maschinenlesbaren Codes (220) sein kann. Die Kalibration kann erfolgen basierend auf mehreren Datensätzen der ermittelten Position der Beleuchtungsflecken und/oder indem der machine learning Algorithmus der Auswerteeinrichtung (112) basierend auf mehreren Datensätzen der ermittelten Position von optisch-maschinenlesbarer Codes und/oder von Beleuchtungsflecken trainiert wird.

Insbesondere ist denkbar - unabhängig von den beschriebenen Ausführungsbeispielen -, dass eine Berücksichtigung einer Geschwindigkeit einer sich bewegenden Vorrichtung erfolgt, insbesondere das die große Ausrichtung der ersten Scaneinrichtung unter Einbeziehung der Geschwindigkeit der Vorrichtung durchgeführt wird.

Weiterhin kann die Vorrichtung (100) eine oder mehrere Abstandssensoren aufweisen (131, 132, 133, 134, 135, 136), insbesondere mindestens zwei in unterschiedliche Richtungen ausgerichtete Abstandssensoren (131, 132, 133, 134, 135, 136), die mit der Steuereinrichtung (170) der Vorrichtung (100) gekoppelt sind. Bevorzugterweise sind die Abstandssensoren Ultraschallsensoren.

Die Vorrichtung (100) kann eine drahtlose Schnittstelle (160) zur Datenkommunikation der Vorrichtung (100) mit einer zentralen Rechnereinheit aufweisen. Beispielsweise kann die drahtlose Schnittstelle (160) eine WLAN Verbindung sein. Vorteilhafterweise können hierdurch die Identifikationsnummer, die positionsbezogenen Daten des optisch-maschinenlesbaren Codes und der ausgelesene optisch-maschinenlesbare Code an eine zentrale Rechnereinheit übermittelt werden.

Die Vorrichtung (100) kann ebenfalls einen oder mehrere Sensoren aufweisen zum Erkennen und Auslesen von nicht-optischen maschinenlesbaren Codes. Insbesondere kann die Vorrichtung (100) ein RFID-Lesegerät aufweisen.

Die Vorrichtung (100) kann auch weitere Sensoren aufweisen, insbesondere zum Erfassen von Umgebungsbedingungen, wie beispielsweise ein Temperatursensor und/oder ein Luftfeuchtigkeitssensor und/oder ein Photodetektor und/oder ein Lichtsensor.

In einer besonders bevorzugten Ausführungsform weist die Vorrichtung (100) weiterhin eine zweite Bilderfassungseinrichtung (111) und eine zweite bewegbare Scaneinrichtung (121) auf, wobei die erste Bilderfassungseinrichtung (111) und die erste bewegbare Scaneinrichtung (121) ein erstes Modul (110) auf einer ersten Seite der Vorrichtung (100) bilden und die zweite Bilderfassungseinrichtung (111) und die zweite bewegbare Scaneinrichtung (121) ein zweites Modul (110) auf einer der ersten Seite gegenüberliegenden zweiten Seite der Vorrichtung (100) bilden. Diese Ausführungsform ist besonders vorteilhaft, da die Vorrichtung (100) mit zwei Modulen (110) das Inventarisieren von Lagerbeständen Lager gleichzeitig auf zwei Regalseiten ermöglicht. Die zweite Bilderfassungseinrichtung (111) kann baugleich zu der ersten Bilderfassungseinrichtung (111) sein und/oder die zweite bewegbare Scaneinrichtung (121) kann baugleich zu der ersten bewegbare Scaneinrichtung (121) sein.

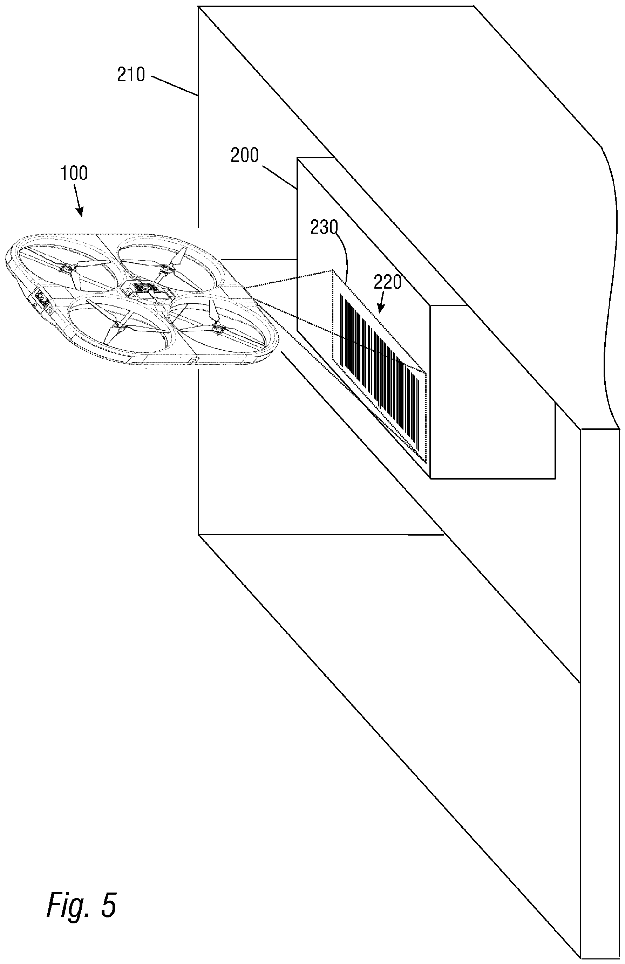

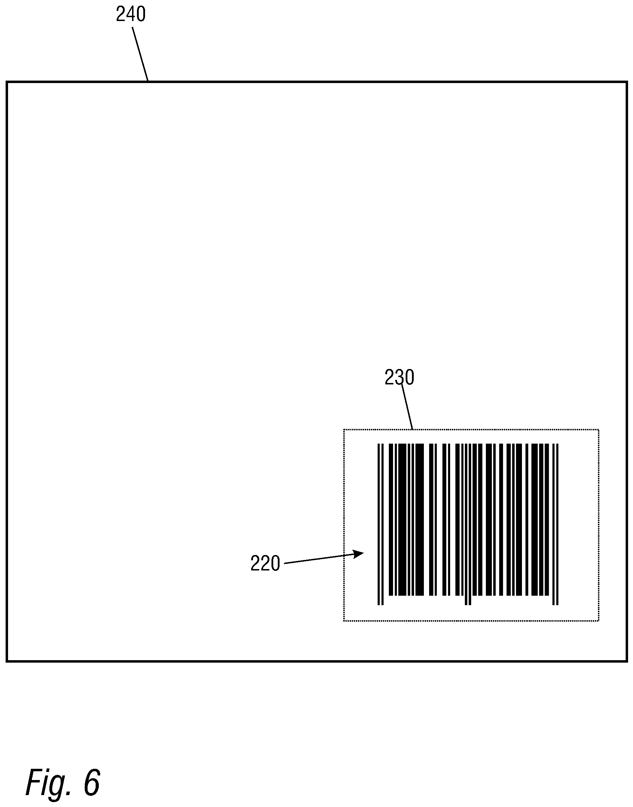

Weiterhin umfasst die vorliegende Offenbarung Verfahren zum Inventarisierend von Lagerbeständen. In einer Ausführungsform weist ein Verfahren zum Inventarisieren auf: Bewegen einer mobilen Vorrichtung (100), insbesondere einer mobilen Vorrichtung (100) gemäß einer der vorhergehend offenbarten Ausführungsformen, entlang von Lagergut (200) und/oder einer Lagereinrichtung (210), wie beispielsweise in Figur 5 anhand eines an Lagergut (200) angebrachten optisch-maschinenlesbaren Codes (220) illustriert ist. Weiterhin umfasst das Verfahren ein Erfassen eines ersten Bildes (240) vom Lagergut (200) und/oder der Lagereinrichtung (210) durch eine erste Bilderfassungseinrichtung (111) der mobilen Vorrichtung (100), wie in Figur 6 illustriert.

Ferner umfasst das Verfahren: ein Verarbeiten des ersten Bildes (240) zur Erkennung, ob ein optisch-maschinenlesbarer Code (220) am Lagergut (200) und/oder an der Lagereinrichtung (210) angebracht ist und nachfolgendes Ermitteln von ersten positions-bezogenen Daten des am Lagergut (200) und/oder an der Lagereinrichtung (210) angebrachten optisch-maschinenlesbaren Codes (220); und ein Übermitteln der ersten positions-bezogenen Daten an eine bewegbare erste Scaneinrichtung (121) der mobilen Vorrichtung (100).

Das Verfahren umfasst ein Ausrichten der ersten Scaneinrichtung (121) auf den optisch-maschinenlesbaren Code (220); und ein Auslesen des optisch-maschinenlesbaren Codes (220) durch die erste Scaneinrichtung (121).

Weiterhin kann das Verfahren umfassen: ein Erfassen, während die mobile Vorrichtung (100) weiterbewegt wird, eines zweiten Bildes (240) des Lagerguts (200) und/oder der Lagereinrichtungen (210) durch die erste Bilderfassungseinrichtung (111, 112); und Verarbeiten des zweiten Bildes (240) zur Erkennung des optisch-maschinenlesbaren Codes (220) und nachfolgendes Ermitteln von zweiten positions-bezogenen Daten des am Lagergut (200) und/oder an den Lagereinrichtungen (210) angebrachten optisch-maschinenlesbaren Codes (220). Vorteilhafterweise kann eine Zuordnung einer Identifikationsnummer und/oder positionsbezogener Daten eines im ersten Bildes (240) erkannten ersten optisch-maschinenlesbaren Codes ermöglichen, dass bei einem im zweiten Bild (240) erkannten zweiten optisch-maschinenlesbaren Codes durch eine Zuordnung einer Identifikationsnummer und/oder positionsbezogener Daten ermittelt werden kann ob der zweite optisch-maschinenlesbare Code gleich oder ungleich dem ersten optisch-maschinenlesbare Code ist.

In einer Ausführungsform kann das Verfahren umfassen: ein Übermitteln der zweiten positions-bezogenen Daten an die bewegbare erste Scaneinrichtung (121) der mobilen Vorrichtung (100); und ein Ausrichten der ersten Scaneinrichtung (121) auf den optisch-maschinenlesbaren Code (220); und erneutes Auslesen des optisch-maschinenlesbaren Codes (220) durch die erste Scaneinrichtung (121). Das erneute Auslesen kann insbesondere erfolgen falls das vorhergehende Auslesen des optisch-maschinenlesbaren Codes (220) durch die erste Scaneinrichtung (121) nicht zu einem Auslesen und/oder einer Dekodierung des optisch-maschinenlesbaren Codes (220) führte. Das Verfahren kann das Erfassen weiterer Bilder (240) und erneutes Auslesen durch die bewegbare erste Scaneinrichtung (121) umfassen bis der optisch-maschinenlesbaren Codes (220) durch die erste Scaneinrichtung dekodiert ist.

Falls die erste Scaneinrichtung (121) eine oder mehrere Scanbeleuchtungen (122) aufweist, können die eine oder mehrere Scanbeleuchtungen (122) durch eine Ausrichtung der ersten Scaneinrichtung (121) auf dem Lagergut (200) und/oder der Lagereinrichtung (210) einen Lichtkegel (230) erzeugen (wie in Figur 5 und Figur 6 dargestellt), wobei ein Beleuchtungsfleck auf dem Lagergut (200) und/oder der Lagereinrichtung (210) erzeugt werden kann. Der Beleuchtungsfleck kann durch die erste Bilderfassungseinrichtung (111) miterfasst werden, wobei beim Verarbeiten des ersten oder zweiten Bildes der Beleuchtungsfleck sowie dessen Position miterkannt wird, und die erkannte Position des Beleuchtungsflecks zum Nachführen der ersten Scaneinrichtung (121) genutzt wird. Vorteilhafterweise kann hierdurch die Genauigkeit der Ausrichtung der ersten Scaneinrichtung (121) auf das am Lagergut (200) und/oder an der Lagereinrichtung (210) angebrachten optisch-maschinenlesbaren Codes (220) verbessert werden.

Gemäß einer Ausführungsform kann das Verfahren aufweisen: Erfassen eines zweiten Bildes (240) vom Lagergut (200) und/oder der Lagereinrichtung (210) durch eine zweite Bilderfassungseinrichtung (111) der mobilen Vorrichtung (100); Verarbeiten des zweiten Bildes (240) zur Erkennung, ob ein optisch-maschinenlesbarer Code (220) am Lagergut (200) und/oder an der Lagereinrichtung (210) angebracht ist und nachfolgendes Ermitteln von zweiten positions-bezogenen Daten des am Lagergut (200) und/oder an der Lagereinrichtung (210) angebrachten optisch-maschinenlesbaren Codes (220); Übermitteln der zweiten positions-bezogenen Daten an eine bewegbare zweite Scaneinrichtung (121) der mobilen Vorrichtung (100); Ausrichten der zweiten Scaneinrichtung (121) auf den optisch-maschinenlesbaren Code (220); und Auslesen des optisch-maschinenlesbaren Codes (220) durch die zweiten Scaneinrichtung (121).

Gemäß einer Ausführungsform kann das Verfahren aufweisen: Übermittlung der Identifikationsnummer, der positionsbezogenen Daten des optisch-maschinenlesbaren Codes und der ausgelesene optisch-maschinenlesbare Code an eine zentrale Rechnereinheit, bevorzugterweise mittels einer drahtlose Schnittstelle (160) zur Datenkommunikation.

### Bezugszeichen

- 100: mobile Vorrichtung
- 101: Grundrahmen
- 102: Motorträger
- 103: Motor
- 104: Gehäuse
- 105: Rotorblatt
- 110: Modul
- 111: Bilderfassungseinrichtung
- 112: Bildverarbeitungseinrichtung / Auswerteeinrichtung
- 121: Scaneinrichtung
- 122: Bildbeleuchtung
- 123: Scankamera
- 131, 132, 133, 134, 135, 136: Ultraschallsensor
- 140: Stromversorgung
- 150: Positionsbestimmungseinrichtung
- 160: drahtlose Schnittstelle
- 170: Steuerungseinrichtung
- 200: Lagergut / Paket
- 210: Lagereinrichtung / Regal
- 220: optisch-maschinenlesbarer Code / optischmaschinenlesbares Etikett
- 230: Lichtkegel der Bildbeleuchtung
- 240: Bild / Bilddaten
- 250: Aufnahmebereich der Bilderfassungseinrichtung

## Patentansprüche

1. Vorrichtung zum Inventarisieren von Lagerbeständen, aufweisend:
- mindestens eine erste Bilderfassungseinrichtung (111) zum bildlichen Erfassen von Lagergut (200) und/oder von Lagereinrichtungen (210),
- mindestens eine relativ zur ersten Bilderfassungseinrichtung (111) bewegbare erste Scaneinrichtung (121) zum Auslesen von optisch-maschinenlesbaren Codes (220), und
- eine Kontrolleinrichtung, insbesondere aufweisend eine Steuereinrichtung (170) und eine mit der Steuereinrichtung (170) verbundene Auswertungseinrichtung (112),
- wobei die Kontrolleinrichtung, insbesondere die Auswertungseinrichtung (112), derart mit der ersten Bilderfassungseinrichtung (111) verbunden und ausgebildet ist, sodass das Vorhandensein eines am Lagergut (200) und/oder an den Lagereinrichtungen (210) angebrachten optisch-maschinenlesbaren Codes (220) erkannt, dessen Position zu ermittelt, und/oder positions-bezogenen Daten des optisch-maschinenlesbaren Codes (220) ausgegeben werden kann, und
- wobei die Kontrolleinrichtung, insbesondere die Steuereinrichtung (170), derart mit der ersten Scaneinrichtung (121) verbunden und ausgebildet ist, sodass die erste Scaneinrichtung (121) hinsichtlich ihrer optischen Ausrichtung auf den optisch-maschinenlesbaren Code (220) ausgerichtet werden kann.

2. Vorrichtung nach Anspruch 1, wobei die erste Bilderfassungseinrichtung (111) einen mit der Kontrolleinrichtung, insbesondere mit der Auswerteeinrichtung (112), gekoppelten Bildsensor aufweist, um vom Bildsensor erfasste Bilddaten (240) auf die Auswerteeinrichtung (112) zu übertragen, wobei die Kontrolleinrichtung, insbesondere die Auswerteeinrichtung (112), eingerichtet ist, basierend auf den erfassten Bilddaten (240) das Vorhandensein und die positions-bezogenen Daten des optisch-maschinenlesbaren Codes (220) am Lagergut (200) und/oder der Lagereinrichtung (210) zu ermitteln und an die erste Scaneinrichtung (121) zu übermitteln.

3. Vorrichtung nach Anspruch 1 oder 2, wobei die erste Scaneinrichtung (121) eine optische Scankamera (123) zum Erfassen des optisch-maschinenlesbaren Codes (220), mindestens eine Halterung und einen Antrieb für die Scankamera (123) aufweist, um die Scankamera (123) relativ um mindestens eine Achse zu bewegen, wobei die Halterung mindestens ein Drehlager mit einem optionalem Dämpfungselement aufweist, insbesondere wobei die Halterung für die Scankamera (123) eine Drehung um mindestens zwei Achsen ermöglicht, und/oder insbesondere wobei die Halterung für die Scankamera (123) eine kardanische Aufhängung ist und die beiden Drehachsen der kardanischen Aufhängung jeweils von einem separaten Antrieb antreibbar und unabhängig voneinander durch die Kontrolleinheit, insbesondere durch die Steuereinrichtung (170) ansteuerbar sind.

4. Vorrichtung nach einem der Ansprüche 2 bis 3, wobei die erste Scaneinrichtung (121) weiterhin eine Bildbeleuchtung (122) aufweist, welche zusammen mit der Scankamera (123) in der Halterung gehalten und zusammen mit der Scankamera (123) bewegbar ist, wobei die Bildbeleuchtung eingerichtet ist, einen Beleuchtungsfleck auf dem Lagergut (200) und/oder der Lagereinrichtung (210) zu erzeugen, der optional von der ersten Bilderfassungseinrichtung (111) erfasst und dessen Position von der mit der ersten Bilderfassungseinrichtung (111) gekoppelten Kontrolleinheit, insbesondere Auswerteeinrichtung (112), ermittelbar ist.

5. Vorrichtung nach einem der vorherigen Ansprüche, weiterhin aufweisend mindestens einen Abstandssensor (131, 132, 133, 134, 135, 136), insbesondere mindestens zwei in unterschiedliche Richtungen ausgerichtete Abstandssensoren (131, 132, 133, 134, 135, 136), die mit Kontrolleinrichtung, insbesondere der Steuereinrichtung (170), der Vorrichtung (100) gekoppelt sind.

6. Vorrichtung nach einem der vorherigen Ansprüche, weiterhin aufweisend mindestens eine Positionsbestimmungseinrichtung (150) zur Ermittlung der Position der Vorrichtung (100) relativ zu einem Markierungspunkt, insbesondere wobei die Positionsbestimmungseinrichtung (150) eine Stereokamera aufweisen kann.

7. Vorrichtung nach einem der vorherigen Ansprüche, weiterhin aufweisend eine zweite Bilderfassungseinrichtung (111) und eine zweite bewegbare Scaneinrichtung (121), wobei die erste Bilderfassungseinrichtung (111) und die erste bewegbare Scaneinrichtung (121) ein erstes Modul (110) auf einer ersten Seite der Vorrichtung (100) bilden und die zweite Bilderfassungseinrichtung (111) und die zweite bewegbare Scaneinrichtung (121) ein zweites Modul (110) auf einer der ersten Seite gegenüberliegenden zweiten Seite der Vorrichtung (100) bilden.

8. Vorrichtung nach einem der vorherigen Ansprüche, weiterhin aufweisend eine drahtlose Schnittstelle (160) zur Datenkommunikation der Vorrichtung (100) mit einer zentralen Rechnereinheit.

9. Vorrichtung nach einem der vorherigen Ansprüche, wobei die Bilderfassungseinrichtung (111) einen größeren optischen Öffnungswinkel definiert als die Scaneinrichtung (121).

10. Vorrichtung nach einem der vorherigen Ansprüche, aufweisend einen Sensor zum Erkennen und Auslesen von nicht-optischen maschinenlesenbaren Codes.

11. Vorrichtung nach einem der vorherigen Ansprüche, wobei die Vorrichtung als mobile Vorrichtung ausgebildet ist, insbesondere wobei die mobile Vorrichtung als teil- oder vollautonome und/oder ferngesteuerte, fliegende, gleitende und/oder fahrende Drohne, als bemanntes und/oder ferngesteuertes Fahrzeug, als Flurförderzeug, als Flurfördergerät oder als autonomes Fahrzeug ausgebildet ist.

12. Verfahren zum Inventarisieren von Lagerbeständen, aufweisend:
- Bewegen einer mobilen Vorrichtung (100), insbesondere einer Vorrichtung gemäß einem oder mehrere der voranstehenden Ansprüche insbesondere gemäß Anspruch 13, entlang von Lagergut (200) und/oder einer Lagereinrichtung (210);
- Erfassen eines ersten Bildes (240) eines Lagerguts (200) und/oder einer Lagereinrichtung (210) durch eine erste Bilderfassungseinrichtung (111) der Vorrichtung (100);
- Verarbeiten des ersten Bildes (240) zur Erkennung, ob ein optisch-maschinenlesbarer Code (220) am Lagergut (200) und/oder an der Lagereinrichtung (210) angebracht ist und nachfolgendes Ermitteln von ersten positions-bezogenen Daten des am Lagergut (200) und/oder an der Lagereinrichtung (210) angebrachten optisch-maschinenlesbaren Codes (220);
- Übermitteln der ersten positions-bezogenen Daten an eine bewegbare erste Scaneinrichtung (121) der Vorrichtung (100);
- Ausrichten der ersten Scaneinrichtung (121) auf den optisch-maschinenlesbaren Code (220); und
- Auslesen des optisch-maschinenlesbaren Codes (220) durch die erste Scaneinrichtung (121).

13. Verfahren nach Anspruch 14, weiterhin aufweisend:
- Erfassen, insbesondere nachdem und/oder während die mobile Vorrichtung (100) weiterbewegt wurde/wird, eines zweiten Bildes (240) des Lagerguts (200) und/oder der Lagereinrichtungen (210) durch die erste Bilderfassungseinrichtung (111);
- Verarbeiten des zweiten Bildes (240) zur Erkennung eines optisch-maschinenlesbaren Codes (220) und nachfolgendes Ermitteln von zweiten positions-bezogenen Daten des am Lagergut (200) und/oder an den Lagereinrichtungen (210) angebrachten optisch-maschinenlesbaren Codes (220);
- Übermitteln der zweiten positions-bezogenen Daten an die bewegbare erste Scaneinrichtung (121) der mobilen Vorrichtung (100);
- Ausrichten der ersten Scaneinrichtung (121) auf den optisch-maschinenlesbaren Code (220); und
- erneutes Auslesen des optisch-maschinenlesbaren Codes (220) durch die erste Scaneinrichtung (121).

14. Verfahren nach Anspruch 14 oder 15,
- wobei durch Erzeugen eines Beleuchtungsflecks auf dem Lagergut (200) und/oder der Lagereinrichtungen (210) durch eine Scanbeleuchtung (122) der bewegbaren ersten Scaneinrichtung (121) eine Ausrichtung der ersten Scaneinrichtung auf dem Lagergut (200) und/oder der Lagereinrichtungen (210) sichtbar wird und der Beleuchtungsfleck durch die erste Bilderfassungseinrichtung (111) miterfasst wird;
- wobei beim Verarbeiten des ersten und/oder zweiten Bildes der Beleuchtungsfleck sowie dessen Position miterkannt wird, und die erkannte Position des Beleuchtungsflecks zum Nachführen der ersten Scaneinrichtung (121) genutzt wird.

15. Verfahren nach einem der Ansprüche 14 bis 16, weiterhin aufweisend:
- Erfassen eines zweiten Bildes (240) eines Lagerguts (200) und/oder der Lagereinrichtung (210) durch eine zweite Bilderfassungseinrichtung (111) der mobilen Vorrichtung (100);
- Verarbeiten des zweiten Bildes (240) zur Erkennung, ob ein optisch-maschinenlesbarer Code (220) am Lagergut (200) und/oder an der Lagereinrichtung (210) angebracht ist und nachfolgendes Ermitteln von zweiten positions-bezogenen Daten des am Lagergut (200) und/oder an der Lagereinrichtung (210) angebrachten optisch-maschinenlesbaren Codes (220);
- Übermitteln der zweiten positions-bezogenen Daten an eine bewegbare zweite Scaneinrichtung (121) der mobilen Vorrichtung (100);
- Ausrichten der zweiten Scaneinrichtung (121) auf den optisch-maschinenlesbaren Code (220); und
- Auslesen des optisch-maschinenlesbaren Codes (220) durch die zweiten Scaneinrichtung (121).
